# EUROPÄISCHE PATENTSCHRIFT

(11) **EP 3 753 689 B1**
(45) Veröffentlichungstag und Bekanntmachung des Hinweises auf die Patenterteilung: **21.02.2024**
(21) Anmeldenummer: 20175583.2
(22) Anmeldetag: 20.05.2020
(51) Int. Cl.: B25J 17/02, B25J 19/06

(54) **KOLLISIONSERKENNUNGSEINRICHTUNG FÜR GREIFERSYSTEME UND VERFAHREN ZUR ERKENNUNG EINER KOLLISION**
COLLISION DETECTING DEVICE FOR GRIPPER SYSTEMS AND COLLISION DETECTION METHOD
DISPOSITIF DE DÉTECTION D'UNE COLLISION POUR SYSTÈMES DE PRÉHENSION ET PROCÉDÉ DE DÉTECTION D'UNE COLLISION

(30) Priorität: 18.06.2019 DE 102019208808
(43) Veröffentlichungstag der Anmeldung: 23.12.2020
(73) Patentinhaber: Robert Bosch GmbH, 70442 Stuttgart (DE)
(72) Erfinder: Stillig, Javier, 70619 Stuttgart (DE); Hauser, Friedrich, 71254 Ditzingen (DE)

(56) Entgegenhaltungen:
- DE-U1- 9 208 980
- DE-U1-202004 007 938
- DE-U1-202013 105 501

## Beschreibung

Die vorliegende Erfindung bezieht sich auf eine Kollisionserkennungseinrichtung für Greifersysteme von Handhabungseinrichtungen und insbesondere zum Einsatz in kollaborativen Robotik- und Maschinenapplikationen und ein Verfahren zur Erkennung einer Kollision. Derartige Vorrichtungen und Verfahren sind aus dem Stand der Technik bekannt. Dabei ist aus dem internen Stand der Technik der Anmelderin bekannt, dass zur Kollisionsvermeidung von Handhabungseinrichtungen und Objekten und insbesondere zur Kollisionsvermeidung des an der Handhabungseinrichtung angeordneten Greifersystems oder des von dem Greifersystem gegriffenen Greifguts und Objekten, Sicherheitseinrichtungen eingesetzt werden. Diese Einrichtungen stellen dabei sicher, dass entweder ein anwendungsabhängig ausreichend großer Abstand zwischen Handhabungseinrichtung, Greifersystem oder Greifgut und Objekt liegt (wie in der DIN EN ISO 13857 vorgegeben), oder dass Kollisionen durch Kraft- bzw. Momentenreduzierung keine Verletzungen oder Beschädigungen an dem Objekt erzeugen (ISO/TS 15066).

Aus der DE 20 2004 007 938 U1 ist eine Überlastsicherung für Werkteile mit den Merkmalen des Oberbegriffe der Ansprüche 1 und 6 bekannt. Diese weist zwei beabstandete Flanschelemente mit einer zugfesten Flanschverbindung auf, wobei eine Überlastsicherung vorgesehen ist.

Aus der DE 92 08 980 U ist eine Überlastsicherung für eine Werkzeughalterung von Manipulatoren bekannt. Die DE 20 2013 105501 U1 beschreibt eine Arbeitsvorrichtung mit einem für eine Mensch-Roboter-Kooperation oder -Kollaboration tauglichen Industrieroboter. Abstandswahrende Sicherheitseinrichtungen sind dabei beispielsweise Abschrankungen wie geeignet aufgestellte Schutzzäune, aber auch sichere, berührungslos messende Schutzsysteme. Alternativ sind auch Sicherheitssysteme bekannt, die auf der oben erwähnten Kraft- und Momentenreduzierung basieren. Dabei sind jedoch in Praxisanwendungen, insbesondere bei der Handhabung großer und wechselnder Lasten, die Kraft- und Momentenüberwachungssysteme deutlich im Nachteil, da die Verfahrgeschwindigkeit der Handhabungseinrichtung im Vergleich zur Nominalverfahrgeschwindigkeit stark reduziert ist bzw. sich die Überwachung von wechselnden Lasten, die die Handhabungseinrichtung mit dem Greifer, dem sogenannten Endeffektor, aufnimmt, nur sehr aufwendig gestalten lässt.

Darüber hinaus tritt auch die Problematik auf, dass insbesondere in der Robotik unerwünschte Kontakte zwischen dem Greifersystem und dem Greifgut und anderen Objekten (Kollisionsfahrten, Crash) beispielsweise durch Fehlprogrammierung des Roboters, erfolgen können. Dabei können die Gefahren eines Kontakts von der Beschädigung des Greifguts oder des Objekts bis hin zur tödlichen Verletzung des Menschen reichen.

Der vorliegenden Erfindung liegt daher die Aufgabe zugrunde eine Kollisionserkennungseirichtung und ein Verfahren zur Erkennung einer Kollision zur Verfügung zu stellen, durch welches die Handhabungseinrichtung nicht in ihren Funktionen eingeschränkt wird und welches dazu geeignet ist, Beschädigungen und Verletzungen an den kollidierenden Objekten zu verhindern. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Kollisionserkennungseinrichtung für Greifersysteme von Handhabungseinrichtungen zur Erkennung von Kollisionen zwischen der Handhabungseinrichtung samt Greifersystem, und Objekten gerichtet, wobei das Greifersystem wenigstens zwei Greifbacken aufweist, welche zum Öffnen und Schließen gegenüber einander bewegbar sind und welche auf einer Flanschplatte angeordnet sind, wobei die Kollisionserkennungseinrichtung wenigstens einen Sensor und wenigstens eine Sicherheitseinrichtung zur Detektion von Kollisionen aufweist.

Dabei ist die Sicherheitseinrichtung dazu geeignet und vorgesehen, die Kollisionserkennungseinrichtung mit dem auf der Flanschplatte montierten Greifersystem zu verriegeln und/oder zu dämpfen, wobei eine bei Berührung der Greifbacke mit dem Objekt entstehende Kraft- und Momentänderung über die Flanschplatte an die Sicherheitseinrichtung übertragbar ist und durch den wenigstens einen Sensor eine Überschreitung aus der Kraft- und Momentänderung zulässigen Wegeänderung der Flanschplatte erkennbar ist.

Bevorzugt ändert sich demnach durch eine Änderung der Kraft und/oder des Moments, welche bei einer Kollision hervorgerufen wird, die Position der Flanschplatte. Die Wegeänderung der Flanschplatte drückt sich dabei bevorzugt durch die Annäherung und/oder Entfernung der Flanschplatte an ein und/oder von einem Gehäuse der Kollisionserkennungseinrichtung aus, wobei diese Distanzänderung bevorzugt durch den Sensor erkannt bzw. detektiert wird.

Bei den Objekten handelt es sich bevorzugt um Menschen, Tiere oder Gegenstände, welche nur in den Maßen mit dem Greifersystem in Kontakt gelangen sollen, wie es den maximal zulässigen Grenzwerten zuträglich ist. Bei den von dem Greifersystem zu greifenden Gegenständen kann es beispielsweise sein, dass sich diese in einer anderen Position befinden als von der Steuerungseinheit der Handhabungseinrichtung vorgegeben und daher von dem Greifsystem nicht richtig gegriffen werden oder mit diesem kollidieren, was zu Beschädigungen an dem Greifersystem und/oder dem Gegenstand führen kann.

Wenn die Gefahr besteht, dass die Handhabungseinrichtung bzw. das Greifersystem mit Menschen kollidiert, ist bei der Auslegung des Handhabungssystems auf die maximale zulässige Kraft- und Momenteneinwirkung gemäß ISO/TS 15066 auf den Menschen zu achten bzw. darf diese nicht überschritten werden, da ansonsten die Gefahr besteht, dass im Kollisionsfall Bedienpersonen, Wartungspersonal oder andere Personen, die sich in der Umgebung der Handhabungseinrichtung aufhalten, verletzt werden.

Bevorzugt ist die Kollisionserkennungseinrichtung und besonders bevorzugt die Sicherheitseinrichtung derart ausgestaltet, so dass diese bei Berührung des Greifersystems mit einem Objekt eine Bewegung der Greiferbacke zulässt. Durch diese geometrisch bedingte Nachgiebigkeit der Sicherheitseinrichtung werden demnach Schäden und Verletzungen an Objekten verhindert.

Das Überschreiten der zulässigen Lageänderung der Flanschplatte lässt dabei bevorzugt Rückschlüsse auf eine Kollision zwischen dem Greifersystem und dem Objekt zu. Diese zulässige Lage- bzw. Wegeänderung kann dabei bevorzugt in verschiedenen Arbeitsbereichen der Handhabungseinrichtung unterschiedlich sein. Wird die zulässige Wegänderung überschritten, wird bevorzugt mittels einer mit dem Sensor und/oder der Sicherheitseinrichtung in Kommunikation stehenden Steuereinrichtung ein Stoppen der Bewegung der Handhabungseinrichtung bewirkt. Die Handhabungseinrichtung kann demnach rechtzeitig gestoppt werden, um Schäden bzw. Verletzungen an Objekten zu verhindern, wobei diese insbesondere auch vor dem Stoppen durch die Nachgiebigkeit des Kollisionselements verhindert werden. Durch die erfindungsgemäße Ausgestaltung werden demnach durch doppelte Sicherheitsmaßnahmen (Stoppen und geometrische Nachgiebigkeit) Schäden und Verletzungen bei Kollisionen vermieden.

Bevorzugt hängt diese davon ab, ob in einem bestimmten Bereich eine Kollision mit Menschen möglich ist oder nicht. Befindet sich die Handhabungseinrichtung beispielswiese in einem Bereich, in dem Greiftätigkeiten ausgeführt werden und Objekte gegriffen werden sollen, ist diese zulässige Wegeänderung bevorzugt höher als in Bereichen, in denen die Handhabungseinrichtung beispielsweise mit Menschen interagiert bzw. Tätigkeiten der Handhabungseinrichtung von Bedienpersonen unterstützt werden. Diese höhere zulässige Wegeänderung ist dabei notwendig, da andernfalls keine Objekte von der Handhabungseinrichtung gegriffen werden können, da bei der ersten Berührung der Greiferbacke mit dem Objekt ein Stopp der Handhabungseinrichtung herbeigeführt werden würde. Bevorzugt ist auch eine Kollisionserkennung nach dem Greifen des Objekts, um Beschädigungen oder Verletzungen zu verhindern, welche durch eine Kollision des Greifguts mit Objekten entstehen würden.

Die mit der Erfindung erzielten Vorteile liegen demnach insbesondere darin, dass im Kollisionsfall von Greifer und/oder Greifgut mit Objekten über den wenigstens einen Sensor, bei dem es sich bevorzugt um eine Wegmesseinrichtung oder einen Näherungsschalter handelt, eine sichere Kollisionserkennung erfolgt.

Bei der Handhabungseinrichtung handelt es sich bevorzugt um ein kollaboratives Robotersystem. Unter einem kollaborativen Robotersystem wird dabei ein (Industrie- ) Roboter verstanden, der gemeinsam mit Menschen in einem Arbeitsraum tätig ist und nicht durch Schutzeinrichtungen von ihm getrennt ist.

In Abhängigkeit vom Aufbau der Kollisionserkennungseinrichtung (geometrisch bedingte Nachgiebigkeit und Reaktionsgeschwindigkeit des Elements) kann eine adäquate Verfahrgeschwindigkeit der Handhabungseinrichtung gewählt werden. Dazu ist auch die Geometrie des Greifguts zu berücksichtigen und gemäß den Anforderungen aus der ISO/TS 15066 zu dimensionieren.

Insbesondere ist dabei bevorzugt zwischen der letzten Achse des Roboters, an dem der Greifer angeordnet ist, und dem Greifersystem (Endeffektors) ein elektromechanisches Element zu Kollisionserkennung zwischengeschaltet, welches sicher einen Kontakt mit Menschen, Tieren oder Gegenständen (Objekte) erkennen kann.

Weiterhin ist die wenigstens eine Sicherheitseinrichtung aktivierbar und deaktivierbar. Erfindungsgemäß die geometrisch bedingte Nachgiebigkeit der Sicherheitseinrichtung in den nicht überwachten Bereichen aktiv.

Zum Betrieb der Kollisionserkennungseinrichtung ist die Anwendung (Applikation) zunächst in überwachte und nicht überwachte Bereiche einzuteilen. Bei dem überwachten Bereich handelt es sich dabei um eine sichere Umgebung, in welcher Kollisionen nicht denkbar sind und in der beispielsweise Greifertätigkeiten von der Handhabungseinrichtung ausgeführt werden und in der die Sicherheitseinrichtung bzw. die Kollisionserkennungseinrichtung verriegelt und damit deaktiviert arbeiten kann. Bei dem nicht überwachten Bereich handelt es sich dagegen um eine unsichere Umgebung, in dem auch Kollisionen mit Menschen möglich und denkbar sind und demnach um Bereiche, in denen Kollisionen erkannt werden müssen und die Sicherheitseinrichtung bzw. Kollisionserkennungseinrichtung nicht verriegelt betrieben wird.

In dem nicht überwachten Bereich wird die Sicherheitseinrichtung deaktiviert und befindet sich demnach bevorzugt in einem entriegelten Zustand und führt besonders bevorzugt nur noch die Dämpfungsfunktion aus. Durch diesen entriegelten Zustand reagiert die Kollisionserkennungseinrichtung bevorzugt wesentlich empfindlicher auf kleinste Wegeänderungen, als in einem verriegelten Zustand, in dem die Flanschplatte wesentlich höhere Kräfte und Momente aufnehmen kann. Bevorzugt wird demnach die Handhabungseinrichtung in dem nicht überwachten Bereich bereits bei kleinsten Wegeänderungen gestoppt.

Bei einer bevorzugten Ausführungsform handelt es sich bei der Sicherheitseinrichtung um ein Dämpfungselement und/oder ein Verriegelungselement. Besonders bevorzugt kann es sich daher bei der Sicherheitseinrichtung und insbesondere dem Dämpfungselement um einen Airbag oder eine Feder handelt, welche bevorzugt gleichzeitig auch als Verriegelungseinrichtung und besonders bevorzugt als kraftschlüssige Verriegelung wirken. Sowohl im aktivierten Zustand, als auch im deaktivierten Zustand, in welchen durch die Sicherheitseinrichtung nur noch die Dämpfungsfunktion ausgeführt wird, verändert sich bei Kraftwirkung auf diese Sicherheitseinrichtung bevorzugt der Luftdruck innerhalb des Airbags bzw. die Federkraft, was zu einer Wegeänderung der Flanschplatte führt, welche der wenigstens eine Sensor und besonders bevorzugt die sichere Wegmesseinrichtung erkennt bzw. detektiert.

Bevorzugt kann auch mehr als ein Verriegelungselement vorgesehen sein und besonders bevorzugt weist die Kollisionserkennungseinrichtung bzw. die Sicherheitseinrichtung zwei Verrieglungselemente auf, wobei bevorzugt eines dieser Verriegelungselemente keine zusätzliche Dämpfungsfunktion ausführt.

Weiterhin handelt es sich bei dem Verriegelungselement um ein kraftschlüssiges Verriegelungselement und/oder ein formschlüssiges Verriegelungselement. Besonders bevorzugt weist die Kollisionserkennungseinrichtung demnach ein kraftschlüssiges Verriegelungselement und ein formschlüssiges Verriegelungselement auf. Bei dem kraftschlüssigen Verriegelungselement handelt es sich um den oben erwähnten Airbag, eine Federeinrichtung oder dergleichen. Denkbar wäre bevorzugt allerdings auch eine kraftschlüssige Verriegelung über beispielsweise magnetische Verschlüsse. Bei der formschlüssigen Verriegelung handelt es sich um einen Schalter mit Betätigungselement, welches in eine Ausnehmung eines Gehäuses der Kollisionserkennungseinrichtung einrastet.

Der Airbag kann demnach sowohl die Dämpfungsfunktion als auch die Verriegelungsfunktionen übernehmen. Sollte kein formschlüssiges Verriegelungselement verwendet werden, so dient der Airbag bevorzugt als kraftschlüssiges Verriegelungselement. Im Falle, dass der Airbag als Verriegelungselement arbeitet, muss der Luftdruck im Airbag ausreichend groß sein, um Bewegungen der Flanschplatte minimal zu gestalten bzw. zu unterbinden.

Bevorzugt befinden sich dabei in dem nicht überwachten Bereich alle vorhandenen Verriegelungseinrichtungen in einem entriegelten Zustand.

Bei Bewegung der Handhabungseinrichtung in nicht überwachten Umgebungen ist die Sicherheitseinrichtung bzw. die Kollisionserkennungseinrichtung bevorzugt nicht verriegelt. Das bedeutet, dass weder die (optionale) formschlüssige Verriegelung noch die kraftschlüssige Verriegelung, welche bevorzugt als Airbag ausgebildet ist, aktiviert sind. Damit ist bevorzugt die Flanschplatte, auf der der Greifer montiert ist, gedämpft über das Dämpfungselement wie beispielsweise den Airbag oder ein ähnlich wirkendes Dämpfersystem, bspw. mechanische Federn, in Grenzen über alle sechs Freiheitsgraden frei beweglich. Bei Kollision ist demnach die Greifbacke bevorzugt, bedingt durch die geometrische Nachgiebigkeit, gemeinsam mit der Flanschplatte leicht schwenkbar und insbesondere um eine Zentralbefestigung des Greifersystems schwenkbar, wie in den Figuren näher erläutert wird.

Kollisionen von Objekten mit dem Greifer oder dem Greifgut werden in diesem Fall über den Sensor und bevorzugt das Wegemesssystem sicher erkannt und an eine Steuerung der Handhabungseinrichtung zum Zwecke einer sofortigen Bewegungsabschaltung (Safe Stop 1, SS1) weitergeleitet.

Das Wegemesssystem besteht dabei bevorzugt aus drei, auf einem Montagelement der Kollisionserkennungseinrichtung verteilten kapazitiven Sensoren, wie insbesondere Kondensatoren, die besonders bevorzugt in einem Winkel von 120° zueinander angeordnet sind. Bevorzugt weist das Wegmesssystem dabei wenigstens zwei, bevorzugt drei und besonders bevorzugt vier dieser kapazitiven Sensoren auf, welche im gleichen Abstand bzw. Winkel zueinander auf einer Kreisbahn angeordnet sind. Das Wegemesssystem ist bevorzugt eine zweikanalige Sicherheitseinrichtung, die dem Performance Level e genügt. Der Performance Level (PL) ist ein Wert, der die Fähigkeit sicherheitsbezogener Teile von Steuerungen beschreibt, unter vorhersehbaren Bedingungen eine Sicherheitsfunktion auszuführen. Das Level e bezeichnet dabei die Wahrscheinlichkeit eines gefahrbringenden Ausfalls pro Stunde (PFHd) 1/h bei ≥ 10⁻⁸ und <10⁻⁷ (0,000001 % bis 0,00001%).

In Fällen in der sich das Greifersystem samt Greifgut in überwachten Umgebungen befindet und ggf. Greiftätigkeiten o. ä. ausführt, wird die Sicherheitseinrichtung bzw. Kollisionserkennungseinrichtung kraft- und/oder formschlüssig verriegelt. Damit sind deutlich höhere Querkräfte und Quermomente an den Greifbacken realisierbar, ohne eine Auslösung über das Wegemesssystem zu provozieren.

Bevorzugt verfügt die Kollisionserkennungseinrichtung über elektrische bzw. pneumatische Anschlüsse zum Zwecke der kraft- und/oder formschlüssigen Verriegelung. Bei einer bevorzugten Ausführungsform handelt es sich bei dem Verriegelungselement um ein elektrisches und/oder mechanisches Verriegelungselement. Bei dem elektrischen Verriegelungselement handelt es sich bevorzugt um einen elektrisch betätigten Schalter oder dergleichen und bei dem mechanischen Verriegelungselement um Magnete oder dergleichen.

In einer weiteren bevorzugten Ausführungsform hängt eine Sensitivität der Kollisionserkennungseinrichtung von mechanischen Dämpfungskonstanten, wie beispielswiese Luftdruck oder Federkraft, und/oder softwarebasierten Informationen des Sensors, wie beispielsweise der Verarbeitung der Informationen aus dem Wegemesssystem, ab.

Bei einer weiteren vorteilhaften Ausführungsform ist die Kollisionserkennungseinrichtung mittels eines Montageelements an der Handhabungseinrichtung und insbesondere der Flanschplatte des Greifersystems angeordnet. Die Kollisionserkennungseinrichtung ist demnach bevorzugt eine eigenständige Baueinheit und kann über mechanische, elektrische und/oder pneumatische Schnittstellen an der Handhabungseinrichtung angeordnet werden. Diese Baueinheit besteht dabei bevorzugt aus dem Montagelement und der Sicherheitseinrichtung mit allen Sensoren, Verriegelungselementen und Dämpfungselementen.

Die Kollisionserkennungseinrichtung ist daher vorteilhaft einfach austauschbar und wechselbar und bevorzugt auch bei bestehenden Handhabungseinrichtungen leicht nachrüstbar. Bevorzugt ist das Montageelement gemäß DIN EN ISO 9409 ausgebildet und an beliebige Handhabungseinrichtungen und Aufnahmeeinrichtungen beliebiger Greifersysteme befestigbar. Die Sensoren bzw. die oben erwähnten kapazitiven Sensoren der Wegmesseinrichtung sind bevorzugt auf dem Montagelement angeordnet.

Bei einer weiteren bevorzugten Ausführungsform weist die Handhabungseinrichtung eine elektrische und/oder fluidische Signal- und Energiedurchleitung auf, welche sich wenigstens vom Greifer zur Flanschplatte erstreckt. Durch diese wird sichergestellt, dass die Kraft- und Momentenänderung im Kollisionsfall weitergeleitet wird.

Wie oben ausführlich beschrieben wurde, liegt der Kollisionserkennungseinrichtung zur Absicherung von Greifer/Greifgut zugrunde, dass initial der Bewegungsraum in überwachte und nicht überwachte Bereiche eingeteilt wird. Sollen unterschiedlich schwere und große Güter gegriffen werden, dann ist die Bewegungsraumeinteilung und die Abstimmung der Sensitivität der Kollisionserkennungseinrichtung vom ungünstigsten Fall ausgehend vorzunehmen. In der Regel sind dies die größten und/oder schwersten Greifgüter, wobei bei jedem Greifgut die normativen Vorgaben der ISO/TS 15066 einzuhalten sind.

Bevorzugt kann als Dämpfungselement auch eine Taumelplatte vorgesehen sein. Gemäß dem zuvor beschriebenen Funktionsprinzip würde eine Kollision des Greifersystems mit dem Objekt über eine Abstandsänderung der Taumelplatte zu dem Sensor und bevorzugt zu einem Näherungsschalter detektiert und ein Not-Halt der Handhabungseinrichtung eingeleitet. Die Bewegung der Handhabungseinrichtung wird hierdurch gestoppt und gefährliche Quetschungen oder Scherungen gemäß ISO/TS 15066 verhindert. Damit in unsicheren Umgebungen (nicht überwachter Bereich) bei geplanten Beschleunigungs- und Abbremsvorgängen keine Abstandsänderung von Taumelplatte zu Näherungsschalter aufgrund der Massenträgheit von Greifer/Greifgut detektiert wird, sind in die Taumelplatte bevorzugt magnetische Verschlüsse integriert, die ein zulässiges Mindestmaß an kraftschlüssiger Verriegelung realisieren.

In einer sicheren Arbeitsumgebung (überwachter Bereich), in der Kollisionen mit Personen nicht möglich sind, kann die Taumelplatte bevorzugt kraftschlüssig über einen Pneumatikzylinder fixiert werden. Die Zuschaltung des dazu notwendigen Drucks, erfolgt bevorzugt über ein Pneumatikventil, welches in einer geeigneten Sicherheitsschaltung eingebettet ist.

Die vorliegende Erfindung ist weiterhin auf ein Verfahren zur Erkennung einer Kollision zwischen einer Handhabungseinrichtung, insbesondere einem Greifersystem der Handhabungseinrichtung und einem Objekt gerichtet, wobei an wenigstens einer Greifbacke des Greifersystems entstehende Kräfte und/oder Momente über eine Flanschplatte, an welcher die Greifbacke angeordnet ist, von einer Sicherheitseinrichtung einer Kollisionserkennungseinrichtung aufgenommen werden und sich hieraus ergebende Wegänderungen durch wenigstens einen Sensor erkannt werden und beim Überschreiten vorgegebener Werte ein Not-Stopp der Handhabungseinrichtung eingeleitet wird.

Bei der Sicherheitseinrichtung handelt es sich dabei bevorzugt um ein Dämpfungselement, wie einen Airbag oder eine Feder und/oder ein kraftschlüssiges Verriegelungselement. Zusätzlich kann vorteilhaft ein formschlüssiges Verriegelungselement, wie beispielsweise ein elektrisch oder pneumatisch betätigter Schalter vorgesehen sein. Bei einer Kraftwirkung auf diese Sicherheitseinwirkung verändert sich der Luftdruck bzw. die Federkraft, was zu einer Wegeänderung führt, welche die Wegmesseinrichtung sicher erkennt bzw. detektiert.

Es wird demnach auch verfahrensseitig eine Kollisionserkennungseinrichtung vorgeschlagen, welche über einen Sensor eine Wegeänderung der Sicherheitseinrichtung detektiert, was ein Indiz für eine Kollision des Greifersystems mit einem Objekt, wie insbesondere einem Menschen oder einem Gegenstand ist.

Insbesondere werden bei einer Kollision von Greifer/Greifgut mit einem Objekt entstehende Kräfte und Momente über die Greifbacken und die Flanschplatte weitergeleitet und von der Sicherheitseinrichtung wie beispielsweise dem Airbag oder dem Federpaket aufgenommen. Dadurch ergibt sich aufgrund des mechanischen Aufbaus der Kollisionserkennungseinrichtung eine Wegänderung, die von dem Sensor detektiert wird. Die Wegänderung wird nun nach den anwendungsspezifischen Notwendigkeiten und den Vorgaben der ISO/TS 15066 geeignet verarbeitet. Sollte die Verarbeitung eine Not-Halt Situation erkennen, wird ein Not-Haltsignal an die Steuerung der Handhabungseinrichtung gesendet, die einen sicheren Halt der Handhabungseinrichtung samt Greifer und unter Umständen auch Greifgut realisiert.

Weitere Vorteile und Ausführungsformen ergeben sich aus den beigefügten Zeichnungen.

Darin zeigt:
- Fig. 1: eine schematische Draufsicht auf einen Teilschnitt einer ersten erfindungsgemäßen Ausführungsform der Kollisionserkennungseinrichtung in nicht sicherer Umgebung;
- Fig. 2: eine schematische Seitenansicht der in Figur 1 gezeigten ersten erfindungsgemäßen Ausführungsform der Kollisionserkennungseinrichtung in nicht sicherer Umgebung;
- Fig. 3: eine weitere schematische Darstellung der ersten erfindungsgemäßen Ausführungsform der Kollisionserkennungseinrichtung in sicherer Umgebung;
- Fig. 4: eine weitere schematische Darstellung der ersten erfindungsgemäßen Ausführungsform der Kollisionserkennungseinrichtung;
- Fig. 5: eine schematische Darstellung einer zweiten erfindungsgemäßen Ausführungsform der Kollisionserkennungseinrichtung in nicht sicherer Umgebung; und
- Fig. 6: eine weitere schematische Darstellung einer zweiten erfindungsgemäßen Ausführungsform der Kollisionserkennungseinrichtung in sicherer Umgebung.

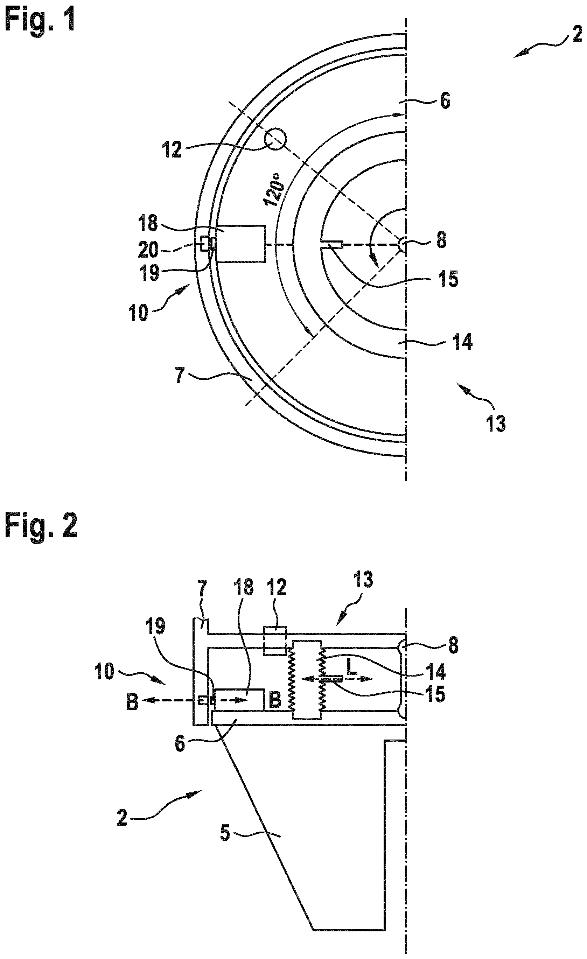

Figur 1 zeigt eine schematische Draufsicht auf einen Teilschnitt einer ersten erfindungsgemäßen Ausführungsform der Kollisionserkennungseinrichtung 10 in nicht sichere Umgebung. Diese Kollisionserkennungseinrichtung 10 ist hier an einem Greifersystem 2 einer nicht näher dargestellten Handhabungseinrichtung angeordnet und weist insbesondere einen Sensor 12 und eine Sicherheitseinrichtung 13 auf.

Die Sicherheitseinrichtung 13 ist dabei dazu geeignet und vorgesehen die Kollisionserkennungseinrichtung 10 mit einer Flanschplatte 6, an welcher, wie in den Figuren 2-4 näher dargestellt ist, das Greifersystem 2 und insbesondere die Greifbacke 5 angeordnet ist, zu verriegeln und diese Flanschplatte 6 zu dämpfen. Insbesondere weist dabei die Sicherheitseinrichtung 13 in dieser Ausführungsform ein Dämpfungselement 14 und eine optionale formschlüssige Verriegelungseinrichtung 18 auf.

Das Dämpfungselement 14 ist dabei in dieser Ausführungsform als Airbag ausgebildet, welcher insbesondere auch als Verriegelungselement zum Verriegeln der Flanschplatte 6 wirken kann. Über das Ein- und Auslassventil 15 kann dabei dem Dämpfungselement 14 Luft zu- oder abgeführt werden.

Weiterhin ist auf der Figur 1 erkennbar, dass das formschlüssige Verriegelungselement 18 nicht betätigt ist und sich demnach insbesondere ein Betätigungselement 19 nicht in einer Ausnehmung 20 eines Montagelements 7 befindet. Es ist demnach in der Figur 1 die Situation dargestellt, bei der sich die Handhabungseinrichtung bzw. das Greifersystem 2 in nicht sicherer Umgebung befindet, in der Kollisionen mit Personen möglich sind. Entsprechend erfüllt auch das Dämpfungselement 14 lediglich seine Dämpfwirkung und keine Verriegelungsfunktion. Das erwähnte Montageelement 7 dient dabei insbesondere dazu, die Kollisionserkennungseinrichtung 10 an der Flanschplatte 6 der Handhabungseinrichtung zu befestigen.

Bei dem Sensor 12 handelt es sich bevorzugt um eine Wegmesseinrichtung, welche, in diesem Ausführungsbeispiel, eine Wegeänderung der Flanschplatte 6 erkennt. Der Pfeil kennzeichnet dabei einen Winkel von 120° und damit die Position eines weiteren Sensors im Fall einer Anordnung von drei Sensoren. Sind vier Sensoren vorgesehen, so sind diese entsprechend in einem Winkel von 90° zueinander angeordnet.

Das Bezugszeichen 8 kennzeichnet weiterhin eine Zentralbefestigungseinrichtung, an welcher die Flanschplatte 6 und die Greifbacke 5 angeordnet sind und um welche diese gemeinsam in einem unverriegelten Zustand, bedingt durch die geometrische Nachgiebigkeit, um 6 Freiheitsgrade schwenkbar sind.

Figur 2 zeigt eine schematische Seitenansicht der in Figur 1 gezeigten ersten erfindungsgemäßen Ausführungsform der Kollisionserkennungseinrichtung 10 in nicht sicherer Umgebung. Auch bei dieser Darstellung ist dabei erkennbar, dass die Kollisionserkennungseinrichtung 10 nicht durch das formschlüssige Verriegelungselement 18 und das Dämpfungselement 14 verriegelt ist. Das Ein- und Auslassventil 15 des Dämpfungselements 14 ist dabei im nicht verriegelten Zustand offen, so dass eine Luftströmung L in beide Richtungen möglich ist und ein, im Vergleich zum verriegelten Zustand, niedrigerer Luftdruck in der Dämpfungseinrichtung 14, insbesondere dem Airbag, vorhanden ist.

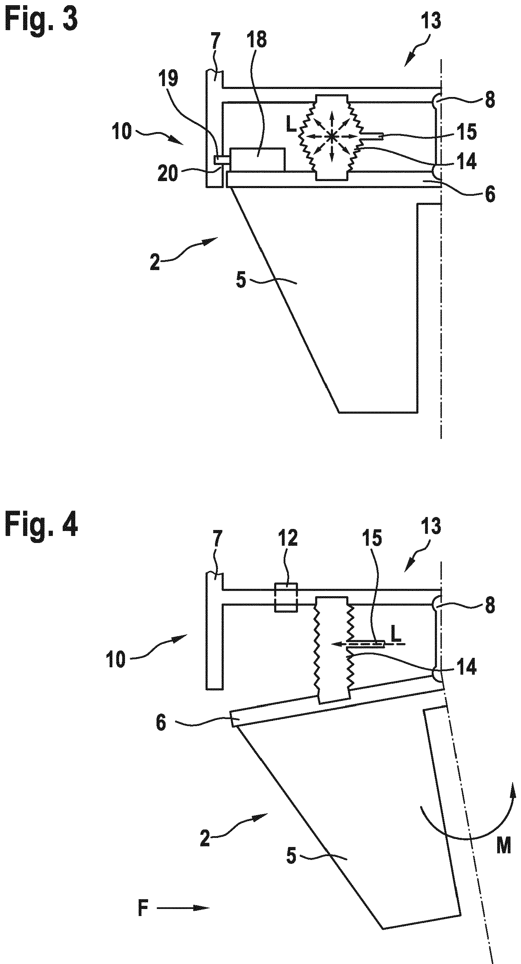

Bei Krafteinwirkung auf die Greifbacke 5 verändert sich durch die hierdurch resultierende Bewegung der Flanschplatte der Luftdruck innerhalb des Airbags und löst eine Bewegung der Greiferbacke 5 aus, wie in Figur 4 gezeigt wird. Bevorzugt ist die Greiferbacke 5 bei dieser Bewegung in 6 Freiheitsgraden um die Zentralbefestigungseinrichtung 8 schwenkbar. Die Bewegung wird dabei insbesondere auch durch die Struktur des Dämpfungselements 14 ermöglicht, welche ein Strecken des Dämpfungselements 14 erlaubt. Zudem führt diese Veränderung des Luftdrucks zu einer Wegeänderung der Flanschplatte 6, welche durch den Sensor 12 detektiert wird und zum Zwecke des Stoppens der Verfahrbewegung der Handhabungseinrichtung an eine nicht dargestellte Steuerung weitergegeben wird.

Das Bezugszeichen B kennzeichnet die Bewegungsrichtung des Betätigungselements 19 des formschlüssigen Verriegelungselements 18.

Figur 3 zeigt eine weitere schematische Darstellung der ersten erfindungsgemäßen Ausführungsform der Kollisionserkennungseinrichtung 10 in sicherer Umgebung. In dieser sicheren Umgebung ist eine Kollision mit Menschen oder Gegenständen nicht denkbar und daher befindet sich die Kollisionserkennungseinrichtung 10 in einem verriegelten Zustand, so dass höhere Kräfte und Momente an der Greifbacke 5 aufgenommen werden können.

Das Betätigungselement 19 des formschlüssigen Verriegelungselements 18 befindet sich demnach in der Ausnehmung 20 des Montageelements 7. Weiterhin wirkt in dieser Ausführungsform auch das Dämpfungselement 14 als Verriegelungselement, wobei hierzu das Ein- und Auslassventil 15 geschlossen ist, so dass keine Luftströmung von innen nach außen und außen nach innen möglich ist und ein Luftdruck im Inneren des Dämpfungselements 14 höher ist, als im nicht verriegelten Zustand. Durch diesen höheren Luftdruck werden insbesondere geringere Bewegungen der Flanschplatte 6 zugelassen. Wie aus der Figur 3 erkennbar ist, ist eine Luftströmung L ausschließlich im Inneren des Dämpfungselements 14 möglich. Bei Krafteinwirkung auf die Greifbacke 5 wird eine Bewegung der Flanschplatte 6 erzeugt, wodurch sich der Luftdruck im Inneren des Dämpfungselements 14 erhöht und sich ausdehnt. Die Lageänderung der Flanschplatte 6 wird durch den (hier nicht dargestellten) Sensor erkannt. Dabei ist jedoch in sicherer Umgebung eine höhere Luftdruckerhöhung erlaubt als in nicht sicherer Umgebung, bevor ein Stopp der Handhabungseinrichtung erzeugt wird.

Figur 4 zeigt eine weitere schematische Darstellung der ersten erfindungsgemäßen Ausführungsform der Kollisionserkennungseinrichtung 10. Diese Darstellung zeigt dabei insbesondere die Bewegung der Greifbacke 5 und der Flanschplatte 6 um die Zentralbefestigungseinrichtung 8 in einer unsicheren Umgebung (nicht verriegelt) im Kollisionsfall.

Insbesondere ist dabei erkennbar, dass sich durch die Kollision bzw. die sich hieraus erhöhenden Kräfte und Momente und die Wegeänderung der Flanschplatte 6, der Luftdruck im Inneren des Dämpfungselements 14 durch eine Luftströmung L von außen in das Innere des Dämpfungselements 14 erhöht. Hierdurch dehnt sich das Dämpfungselement 14 aufgrund der Struktur in der Längsrichtung aus und bewirkt ein Verschwenken der Greifbacke 5, so dass Verletzungen bei Kollisionen mit Menschen oder Beschädigungen bei Kollisionen mit Gegenständen verhindert werden. Gleichzeitig wird diese Wegeänderung der Flanschplatte 6 auch durch den Sensor 12 detektiert und entsprechend über eine nicht dargestellte Steuerungseinrichtung ein Stopp der Verfahrbewegung der Handhabungseinrichtung erzeugt.

Die Bezugszeichen bzw. Pfeile F und M kennzeichnen die auf die Greifbacke 5 wirkenden Kräfte und Momente.

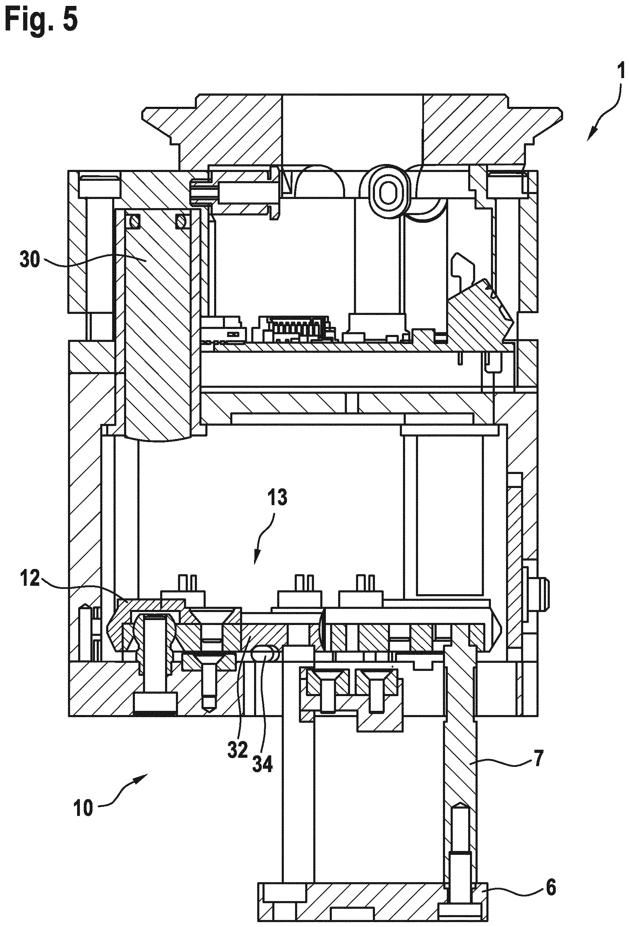

Figur 5 zeigt eine schematische Darstellung einer zweiten erfindungsgemäßen Ausführungsform der Kollisionserkennungseinrichtung 10 in nicht sicherer Umgebung. In dieser Ausführungsform weist die Sicherheitseinrichtung 13 als Dämpfungselement eine Taumelplatte 32 mit Lagerung 34 auf. Weiterhin ist als Verriegelungselement ein Pneumatikzylinder 30 vorgesehen. Da sich die Handhabungseinrichtung 1 hier in nicht sicherer Umgebung befindet, in welcher Kollisionen mit Objekten und insbesondere Menschen und Gegenständen tendenziell möglich sind, ist die Handhabungseinrichtung 1 nicht über den Pneumatikzylinder 30 verriegelt.

Erfolgt nun eine Kollision, der in dieser Darstellung nicht dargestellten Greifbacke, welche an der Flanschplatte 6 angeordnet ist, mit dem Objekt detektiert der Sensor 12, bei dem es sich hier bevorzugt um einen Näherungsschalter handelt, eine Abstandsänderung der Taumelplatte 32 zu dem Sensor 12, wodurch ein Not-Halt der Handhabungseinrichtung 1 eingeleitet wird.

Das Bezugszeichen 7 kennzeichnet auch hier wiederum ein Montageelement 7, über welches die Kollisionserkennungseinrichtung 10 an der Handhabungseinrichtung 1 angeordnet wird. Dabei ist erkennbar, dass die Taumelplatte 32 mit dem Montageelement 7 verbunden ist.

Eine Kollision eines Objekts mit dem Gehäuse bzw. dem Montageelement 7 der Kollisionserkennungseinrichtung 10 kann zudem beispielsweise über eine nicht dargestellte kapazitive Sensorhaut an dem Montagelement 7 verhindert werden.

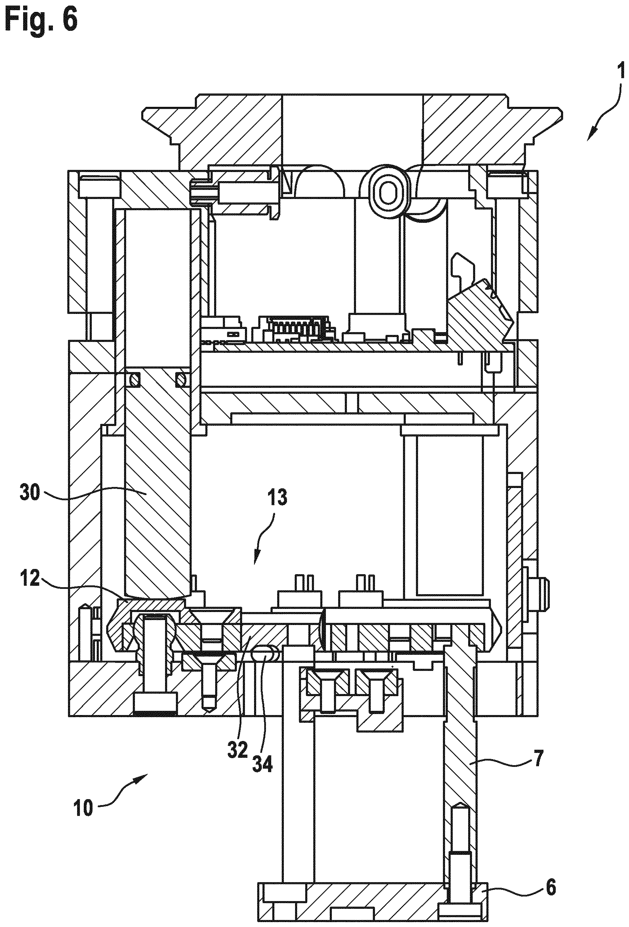

Figur 6 zeigt eine weitere schematische Darstellung einer zweiten erfindungsgemäßen Ausführungsform der Kollisionserkennungseinrichtung 10 in sicherer Umgebung. In dieser sicheren Arbeitsumgebung sind Kollisionen mit Personen nicht möglich, so dass die Taumelplatte 32 hier kraftschlüssig über den Pneumatikzylinder 30 fixiert wird. Die Zuschaltung des dazu notwendigen Drucks, kann über ein Pneumatikventil erfolgen, welches in einer geeigneten Sicherheitsschaltung eingebettet ist.

Bei einer Kollision der Greiferbacke wird entsprechend wieder eine Kraft- und Momentenänderung über die Flanschplatte 6 an die Taumelplatte 32 und deren Lagerung 34 übertragen und eine sich hieraus ergebende Wegeänderung durch den Sensor 12 detektiert. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Kollisionserkennungseinrichtung (10) für Greifersysteme (2) von Handhabungseinrichtungen (1) zur Erkennung von Kollisionen zwischen der Handhabungseinrichtung
(1) und insbesondere dem Greifersystem (2) und Objekten, wobei das Greifersystem
(2) wenigstens zwei Greifbacken (5) aufweist, welche zum Öffnen und Schließen gegenüber einander bewegbar sind und welche auf einer Flanschplatte (6) angeordnet sind, wobei die Kollisionserkennungseinrichtung (10) wenigstens einen Sensor (12) und wenigstens eine Sicherheitseinrichtung (13) aufweist, und die Sicherheitseinrichtung (13) dazu geeignet und vorgesehen ist, die Kollisionserkennungseinrichtung (10) mit dem auf der Flanschplatte (6) montierten Greifersystem (2) zu verriegeln und/oder zu dämpfen, wobei eine bei Berührung der Greifbacke (5) mit dem Objekt entstehende Kraft- und Momentänderung über die Flanschplatte (6) an die Sicherheitseinrichtung (13) übertragbar ist und durch den wenigstens einen Sensor (12) eine Überschreitung aus der Kraft- und Momentänderung zulässigen Wegeänderung der Flanschplatte (6) erkennbar ist,
**dadurch gekennzeichnet, dass**
es sich bei der Sicherheitseinrichtung (13) um ein kraftschlüssiges und ein formschlüssiges Verriegelungselement (18) handelt, wobei es sich bei dem kraftschlüssigen Verriegelungselement um einen Airbag oder eine Federeinrichtung handelt und bei dem formschlüssigen Verriegelungselement (18) um einen Schalter mit Betätigungselement (19), welches in eine Ausnehmung (20) eines Gehäuses der Kollisionserkennungseinrichtung (10) einrastet, und
die wenigstens eine Sicherheitseinrichtung (13) in überwachten Bereichen, bei denen es sich um eine sichere Umgebung, in welcher Kollisionen nicht denkbar sind, handelt, deaktivierbar ist und in nicht überwachten Bereichen, bei denen es sich um eine unsichere Umgebung, in dem auch Kollisionen mit Menschen möglich sind, handelt, aktivierbar ist, wobei eine geometrisch bedingte Nachgiebigkeit der Sicherheitseinrichtung (13) in den nicht überwachten Bereichen aktiv ist.

2. Kollisionserkennungseinrichtung (10) nach Anspruch 1,
**dadurch gekennzeichnet, dass**
es sich bei der Sicherheitseinrichtung (13) um ein Dämpfungselement (14) handelt.

3. Kollisionserkennungseinrichtung (10) nach Anspruch 1,
**dadurch gekennzeichnet, dass**
es sich bei dem Verriegelungselement um ein elektrisches und/oder mechanisches Verriegelungselement handelt.

4. Kollisionserkennungseinrichtung (10) nach wenigstens einem der vorhergehenden Ansprüche,
**dadurch gekennzeichnet, dass**
eine Sensitivität der Kollisionserkennungseinrichtung (10) von mechanischen Dämpfungskonstanten und/oder softwarebasierten Informationen des Sensors (12) abhängt.

5. Kollisionserkennungseinrichtung (10) nach wenigstens einem der vorhergehenden Ansprüche,
**dadurch gekennzeichnet, dass**
die Kollisionserkennungseinrichtung (10) mittels eines Montageelements (7) an der Handhabungseinrichtung (1) und insbesondere der Flanschplatte (6) des Greifersystems (2) angeordnet ist.

6. Verfahren zur Erkennung einer Kollision zwischen einer Handhabungseinrichtung (1), insbesondere einem Greifersystem (2) der Handhabungseinrichtung (1) und einem Objekt, wobei an wenigstens einer Greifbacke (5) des Greifersystems (2) entstehende Kräfte und/oder Momente über eine Flanschplatte (6), an welcher die Greifbacke (5) angeordnet ist, von einer Sicherheitseinrichtung (13) einer Kollisionserkennungseinrichtung (10) aufgenommen werden und sich hieraus ergebende Wegänderungen durch wenigstens einen Sensor (12) erkannt werden und beim Überschreiten vorgegebener Werte ein Not-Stopp der Handhabungseinrichtung (1) eingeleitet wird, **dadurch gekennzeichnet, dass**
es sich bei der Sicherheitseinrichtung (13) um ein kraftschlüssiges und ein formschlüssiges Verriegelungselement (18) handelt, wobei es sich bei dem kraftschlüssigen Verriegelungselement um einen Airbag oder eine Federeinrichtung handelt und bei dem formschlüssigen Verriegelungselement (18) um einen Schalter mit Betätigungselement (19), welches in eine Ausnehmung (20) eines Gehäuses der Kollisionserkennungseinrichtung (10) einrastet, und
die wenigstens eine Sicherheitseinrichtung (13) in überwachten Bereichen, bei denen es sich um eine sichere Umgebung, in welcher Kollisionen nicht denkbar sind, handelt, aktivierbar ist und in nicht überwachten Bereichen, bei denen es sich um eine unsichere Umgebung, in dem auch Kollisionen mit Menschen möglich sind, handelt, deaktivierbar ist, wobei eine geometrisch bedingte Nachgiebigkeit der Sicherheitseinrichtung (13) in den nicht überwachten Bereichen aktiv ist.

## Claims

1. Collision detection device (10) for gripper systems (2) of handling devices (1) for detecting collisions between the handling device (1), and in particular the gripper system (2), and objects, wherein the gripper system (2) has at least two gripping jaws (5) which can be moved with respect to one another for opening and closing and which are arranged on a flange plate (6), wherein the collision detection device (10) has at least one sensor (12) and at least one safety device (13), and the safety device (13) is suitable and provided for the purpose of locking and/or damping the collision detection device (10) with the gripper system (2) mounted on the flange plate (6), wherein a change in force and torque produced when the gripping jaw (5) touches the object can be transmitted to the safety device (13) via the flange plate (6), and the at least one sensor (12) can be used to detect when a change in distance of the flange plate (6) that is permissible from the change in force and torque is exceeded,
**characterized in that**
the safety device (13) is a force-fitting locking element and a form-fitting locking element (18), wherein the force-fitting locking element is an airbag or a spring device and the form-fitting locking element (18) is a switch with an actuation element (19) which latches into a recess (20) of a housing of the collision detection device (10), and
the at least one safety device (13) can be deactivated in monitored regions, which are a safe environment in which collisions are not conceivable, and can be activated in unmonitored regions, which are an unsafe environment in which collisions with people are also possible, wherein a geometrically caused flexibility of the safety device (13) is active in the unmonitored regions.

2. Collision detection device (10) according to Claim 1,
**characterized in that**
the safety device (13) is a damping element (14).

3. Collision detection device (10) according to Claim 1,
**characterized in that**
the locking element is an electrical and/or mechanical locking element.

4. Collision detection device (10) according to at least one of the preceding claims,
**characterized in that**
a sensitivity of the collision detection device (10) depends on mechanical damping constants and/or software-based information from the sensor (12).

5. Collision detection device (10) according to at least one of the preceding claims,
**characterized in that**
the collision detection device (10) is arranged on the handling device (1) and in particular the flange plate (6) of the gripper system (2) by means of a mounting element (7).

6. Method for detecting a collision between a handling device (1), in particular a gripper system (2) of the handling device (1), and an object, wherein forces and/or torques produced at at least one gripping jaw (5) of the gripper system (2) are absorbed by a safety device (13) of a collision detection device (10) via a flange plate (6), on which the gripping jaw (5) is arranged, and resulting changes in distance are detected by at least one sensor (12), and an emergency stop of the handling device (1) is initiated when predefined values are exceeded,
**characterized in that**
the safety device (13) is a force-fitting locking element and a form-fitting locking element (18), wherein the force-fitting locking element is an airbag or a spring device and the form-fitting locking element (18) is a switch with an actuation element (19) which latches into a recess (20) of a housing of the collision detection device (10), and
the at least one safety device (13) can be activated in monitored regions, which are a safe environment in which collisions are not conceivable, and can be deactivated in unmonitored regions, which are an unsafe environment in which collisions with people are also possible, wherein a geometrically caused flexibility of the safety device (13) is active in the unmonitored regions.

## Revendications

1. Dispositif de détection de collision (10) pour systèmes de préhension (2) de dispositifs de manipulation (1) permettant de détecter des collisions entre le dispositif de manipulation (1) et en particulier le système de préhension (2) et des objets, le système de préhension (2) comportant au moins deux mâchoires de préhension (5) qui sont mobiles l'une par rapport à l'autre pour s'ouvrir et se fermer et qui sont agencées sur une plaque à brides (6), le dispositif de détection de collision (10) comportant au moins un capteur (12) et au moins un dispositif de sécurité (13), et le dispositif de sécurité (13) est approprié et prévu pour verrouiller et/ou amortir le dispositif de détection de collision (10) avec le système de préhension (2) monté sur la plaque à brides (6), une variation de force et de couple produite lors du contact de la mâchoire de préhension (5) avec l'objet pouvant être transmise au dispositif de sécurité (13) par l'intermédiaire de la plaque à brides (6) et un dépassement de la variation de course de la plaque à brides (6) autorisée par la variation de force et de couple pouvant être détecté par ledit au moins un capteur (12),
**caractérisé en ce que**
le dispositif de sécurité (13) est un élément de verrouillage à complémentarité de force et un élément de verrouillage à complémentarité de forme (18), l'élément de verrouillage à complémentarité de force étant un coussin gonflable ou un dispositif à ressort et l'élément de verrouillage à complémentarité de forme (18) étant un commutateur comportant un élément d'actionnement (19), qui s'enclenche dans un évidement (20) d'un boîtier du dispositif de détection de collision (10), et
ledit au moins un dispositif de sécurité (13) peut être désactivé dans des zones surveillées, qui constituent un environnement sûr dans lequel des collisions ne sont pas envisageables, et peut être activé dans des zones non surveillées, qui constituent un environnement non sûr dans lequel des collisions avec des personnes sont également possibles, une souplesse du dispositif de sécurité (13) due à la géométrie étant active dans les zones non surveillées.

2. Dispositif de détection de collision (10) selon la revendication 1,
**caractérisé en ce que**
le dispositif de sécurité (13) est un élément d'amortissement (14).

3. Dispositif de détection de collision (10) selon la revendication 1,
**caractérisé en ce que**
l'élément de verrouillage est un élément de verrouillage électrique et/ou mécanique.

4. Dispositif (10) selon au moins l'une des revendications précédentes,
**caractérisé en ce que**
une sensibilité du dispositif de détection de collision (10) dépend de constantes d'amortissement mécaniques et/ou d'informations basées sur un logiciel du capteur (12) .

5. Dispositif (10) selon au moins l'une des revendications précédentes,
**caractérisé en ce que**
le dispositif de détection de collision (10) est agencé au moyen d'un élément de montage (7) sur le dispositif de manipulation (1) et notamment sur la plaque à brides (6) du système de préhension (2).

6. Procédé de détection d'une collision entre un dispositif de manipulation (1), en particulier un système de préhension (2) du dispositif de manipulation (1) et un objet, dans lequel des forces et/ou des couples agissant sur au moins une mâchoire de préhension (5) du système de préhension (2) sont transmis par une plaque à brides (6) sur laquelle est agencée la mâchoire de préhension (5), sont absorbés par un dispositif de sécurité (13) d'un dispositif de détection de collision (10) et les modifications de course qui en résultent sont détectées par au moins un capteur (12) et, en cas de dépassement de valeurs prédéfinies, un arrêt d'urgence du dispositif de manipulation (1) est déclenché, **caractérisé en ce que**,
le dispositif de sécurité (13) est un élément de verrouillage à complémentarité de force et un élément de verrouillage à complémentarité de forme (18), l'élément de verrouillage à complémentarité de force étant un coussin gonflable ou un dispositif à ressort et l'élément de verrouillage à complémentarité de forme (18) étant un commutateur comportant un élément d'actionnement (19), qui s'enclenche dans un évidement (20) d'un boîtier du dispositif de détection de collision (10), et
ledit au moins un dispositif de sécurité (13) peut être activé dans des zones surveillées qui constituent un environnement sûr dans lequel des collisions ne sont pas envisageables, et peut être désactivé dans des zones non surveillées qui constituent un environnement non sûr dans lequel des collisions avec des personnes sont également possibles, une souplesse du dispositif de sécurité (13) due à la géométrie étant active dans les zones non surveillées.
